# EUROPÄISCHE PATENTSCHRIFT

(11) **EP 3 096 042 B1**
(45) Veröffentlichungstag und Bekanntmachung des Hinweises auf die Patenterteilung: **13.06.2018**
(21) Anmeldenummer: 16001244.9
(22) Anmeldetag: 11.04.2014
(51) Int. Cl.: F16H 61/28, F16H 61/32

(54) **GETRIEBEAKTOR FÜR EIN KRAFTFAHRZEUGGETRIEBE SOWIE VERFAHREN ZUR STEUERUNG EINES GETRIEBEAKTORS**
TRANSMISSION ACTUATOR FOR A MOTOR VEHICLE TRANSMISSION AND METHOD FOR ACTUATING A TRANSMISSION ACTUATOR
ACTIONNEUR DE TRANSMISSION POUR UNE TRANSMISSION DE VÉHICULE AUTOMOBILE ET PROCÉDÉ DE COMMANDE D'UN ACTIONNEUR DE TRANSMISSION

(30) Priorität: 30.04.2013 DE 102013207871
(43) Veröffentlichungstag der Anmeldung: 23.11.2016
(62) Teilanmeldung aus: 14716597.1
(73) Patentinhaber: Schaeffler Technologies AG & Co. KG, 91074 Herzogenaurach (DE)
(72) Erfinder: Ehrlich, Matthias, 77815 Bühl (DE); Kretz-Busch, Volker, 77833 Ottersweier (DE)

(56) Entgegenhaltungen:
- DE-A1-102006 054 901
- DE-A1-102006 054 902
- DE-A1-102006 054 907
- DE-A1-102011 051 863
- US-A1- 2008 060 462

## Beschreibung

Die vorliegende Erfindung betrifft einen Getriebeaktor für Kraftfahrzeuggetriebe, sowie ein Verfahren zur Ansteuerung eines derartigen Getriebeaktors. Unter einem erfindungsgemäßen Getriebeaktor ist insbesondere ein Getriebeaktor zu verstehen, welcher betätigend innerhalb eines Kraftfahrzeugs auf wenigstens eine der folgenden Einrichtungen: Fahrzeuggetriebe, Kupplung und Bremse betätigend wählend und/oder schaltend einwirkt.
Bekanntermaßen können die Gänge von Kraftfahrzeuggetrieben, wie beispielsweise automatisierten Schaltgetrieben (ASG), Parallelschaltgetrieben (PSG) bzw. Doppelkupplungsgetrieben (DKG) oder anderen ähnlichen Getrieben mittels eines Kraftfahrzeuggetriebeaktors ein- und ausgelegt werden, der dabei eine sogenannte äußere Getriebeschaltung bildet.
Beispielsweise ist es aus der DE 10 2004 038 955 A1 bekannt, genau einen Elektromotor in einem Kraftfahrzeuggetriebeaktor zu verwenden, um sowohl die Wählbewegungen, als auch die Schaltbewegungen im Getriebe durchzuführen. Ein entsprechender Getriebeaktor wird daher auch als 1-Motor-Getriebeaktor bezeichnet.

Ferner ist es aus DE 10 2006 054 901, welche alle Merkmale des Oberbegriffs des Anspruchs 1 offenbart, der Anmelderin bekannt, diesen 1-Motor-Getriebeaktor so aufzubauen, dass eine Drehung eines Elektromotors als Antriebskraft für den Getriebeaktor in eine erste Richtung eine Schaltbewegung und eine entsprechende Bewegung des Elektromotors in die andere Richtung eine Wählbewegung der Schaltwelle des Getriebes bewirkt. Zum Schalten von einer Schaltbewegung in eine Wählbewegung weist der Getriebeaktor eine Verbindungseinrichtung auf, welche eine Spindelmutter mit entsprechenden Zahnstangen bzw. Zahnrädern zum Bewirken einer Schalt- bzw. Wählbewegung der Schaltwelle koppelt.
Auch aus der DE 10 2006 054 902 A1 ist ein 1-Motor-Getriebeaktor bekannt, mittels dem Gänge ein- und ausgelegt werden können. Der Elektromotor ist dafür mit einer Gewindespindel und einer Spindelmutter auf dieser Spindel verbunden. Die Spindelmutter weist mindestens zwei Zahnstangen auf. Je nach Verzahnung der Spindelmutter mit der Schaltwelle und axialer Bewegung der Spindelmutter können durch diese Eingriffe Gänge ein- oder ausgelegt werden.
Weiterhin offenbart. die US 2008/0060462 A1 einen 1-Motor-Getriebeaktor, welcher ohne eine axial bewegliche Spindelmutter auskommt. Dieser Aktor kann zwischen Wähl- und Schaltzuständen umgeschaltet werden.
Die Aufgabe der vorliegenden Erfindung liegt darin, einen Getriebeaktor, insbesondere einen 1-Motor-Getriebeaktor, in einer alternativen Bauform vorzustellen, welcher geeignet ist, ein automatisiertes Getriebe, wie ein PSG, ASG oder DKG zu betätigen. Er soll jeweils insbesondere sowohl für die Schalt-, als auch für die Wählbewegungen verwendbar sein. Die Umschaltung zwischen Schalt -und Wählbewegung soll möglichst bauteilarm ausgeführt sein.

Erfindungsgemäß wird daher ein Getriebeaktor gemäß Anspruch 1 vorgeschlagen. Ein Verfahren zur Ansteuerung eines Getriebeaktors nach einem der Ansprüche 3 bis 6, 8 und 9 ist Gegenstand des Anspruchs 12. Bevorzugte Weiterbildungen sind Gegenstand der Unteransprüche.
Es wird also insbesondere ein Getriebeaktor, das heißt ein Getriebeaktor für eine Kraftfahrzeuggetriebeeinrichtung, vorgeschlagen. Dieser Getriebeaktor weist genau einen Motor auf, welcher eine Spindel antreibt. Hierfür kann zwischen dem Getriebeaktor und der Spindel ein Getriebe vorgesehen sein, wobei dieses Getriebe vorzugsweise eine Übersetzung von mindestens aufweist. Die Spindel selber ist in Wirkverbindung mit einer Spindelmutter. Die Spindelmutter ihrerseits ist mit einer Schaltwelle zur Betätigung der Getriebeeinrichtung des Kraftfahrzeugs gekoppelt. Die Spindelmutter kann dabei entweder axial entlang der Spindel verfahren werden, das heißt, sie kann eine translatorische Bewegung ausführen, oder sie kann um die Spindel herum verschwenkt werden, das heißt, eine rotative Bewegung ausführen. Über ein Getriebe zwischen der Spindelmutter und der Schaltwelle wird die Bewegung der Spindelmutter, das heißt die rotatorische oder translatorische Bewegung, in eine Wähl- und ggf. auch Schaltbewegung der Schaltwelle umgewandelt. Hierbei wird eine rotative Bewegung der Spindelmutter in eine translatorische Bewegung der Schaltwelle längs ihrer eigenen Achse umgewandelt und ggf. zusätzlich eine translatorische Bewegung der Spindelmutter in eine Verschwenkbewegung, das heißt eine Rotativbewegung, der Schaltwelle zum Schalten bzw. Auslegen eines Ganges umgewandelt.

Zur Umwandlung einer translatorischen Bewegung der Spindelmutter in eine Schaltbewegung der Schaltwelle weist der Getriebeaktor ein Getriebe auf, welches die Spindelmutter, wenigstens zwei erste Zahnräder und ein Wellenrad, welches mit der Schaltwelle verbunden ist, umfasst. In einem ersten axialen Stellungsbereich der Spindelmutter auf der Spindel ist die Spindelmutter selber nur genau mit einem ersten Zahnrad gekoppelt. Über dieses eine Zahnrad wird dann die translatorische Bewegung der Spindelmutter in eine rotative Bewegung zunächst dieses Zahnrades und damit auch in eine entsprechende rotative Bewegung der Schaltwelle als Schaltbewegung umgewandelt.
Alternativ oder zusätzlich zu diesem Getriebe zur Umwandlung der translatorischen Bewegung der Spindelmutter in eine Schaltbewegung der Schaltwelle ist es vorgesehen, dass das Getriebe des Getriebeaktors, die Spindelmutter, ein Übersetzungszahnrad und zumindest einen Wähltopf umfasst. Der Wähltopf selber weist dabei eine periodische Bahnkurve, insbesondere in Form einer Aussparung über seinen Umfang, auf, welche mit der Schaltwelle wirkverbunden ist. Dieses Getriebe ist dabei so ausgestattet, dass es einen zweiten axialen Stellungsbereich der Spindelmutter auf der Spindel gibt, welcher von dem ersten Stellungsbereich verschieden ist, und in welchem die Spindelmutter so mit dem Wähltopf verbunden ist, dass eine rotative Bewegung der Spindelmutter in eine im Wesentlichen periodisch wiederkehrende Heb- und Senkbewegung der Schaltwelle als Wählbewegung resultiert.
Zur Umsetzung der translatorischen Bewegung der Spindelmutter in eine rotative Bewegung der Schaltwelle ist es vorteilhafter Weise vorgesehen, dass die beiden Zahnräder, auch als die beiden ersten Zahnräder bezeichnet, so voneinander entkoppelt sind, dass in dem ersten axialen Stellungsbereich immer nur genau ein Zahnrad in direkter oder indirekter Wirkverbindung mit der Spindelmutter ist. Je nach Zahnrad, welches mit der Spindelmutter in Wirkverbindung ist, wird dann eine rotative Schaltbewegung der Schaltwelle in die eine oder in die andere Richtung bewirkt. Dieser Aufbau von den beiden Zahnrädern und der Schaltwelle kann insbesondere so vorgesehen sein, dass beide Zahnräder in ein Wellenrad der Schaltwelle von im Wesentlichen entgegengesetzten Seiten eingreifen. Bei gleichem Drehsinn der einzelnen Zahnräder wird dann eine Rotation der Schaltwelle in unterschiedlichen Richtungen erzeugt. Entkoppelt sind die beiden Zahnräder dann insofern voneinander, dass sie jeweils frei in die eine oder andere Richtung rotieren können. Wird das eine Zahnrad über die Spindelmutter angetrieben, so kann das andere Zahnrad frei über die Kopplung mit der Schaltwelle mitrotieren. Eine Verbindung der beiden Zahnräder über die Spindelmutter ist dabei zu keinem Zeitpunkt gegeben. Es kann somit zu keiner Verspannung der Zahnräder untereinander führen. Die Entkopplung ist somit insbesondere als eine Entkopplung in Bezug auf die Spindelmutter zu verstehen.

Um jeweils zu gewährleisten, dass die Spindelmutter immer nur mit einem Zahnrad in Wirkverbindung steht, ist es vorgesehen, dass die Spindelmutter als Zahnstange mit einer Verzahnung ausgebildet ist, wobei sich die Verzahnung nur über einen Teilumfang der Spindelmutter umfangsmäßig so erstreckt, dass die Spindelmutter wenigstens zwei unterschiedliche Winkelpositionen einnehmen kann, in denen die Verzahnung bei einer translatorischen Bewegung der Spindelmutter ausschließlich in das eine oder das andere Zahnrad eingreift. Auf diese Weise könnten sich auch noch mehr Winkelpositionen ergeben, in denen die Zahnstange bzw. die Verzahnung der Spindelmutter in Bezug auf die Spindelmutter entkoppelte Zahnräder eingreift.

Wie geschildert, ist in dem ersten axialen Stellungsbereich der Spindelmutter das Getriebe des Getriebeaktors so ausgebildet, dass eine translatorische Bewegung der Spindelmutter in eine rotative Bewegung der Schaltwelle umgewandelt wird. In einer besonders bevorzugten Ausführungsform des Getriebeaktors ist es vorgesehen, dass hierfür eine Verdrehsicherung so bereit gestellt ist, dass die Spindelmutter in diesem ersten axialen Stellungsbereich gegenüber einem Gehäuse gegen Verdrehungen gesichert ist, das heißt abgestützt wird. Eine Rotation der Spindel führt dann in diesem ersten axialen Stellungsbereich immer in eine Axialbewegung der Spindelmutter. Weiterhin bevorzugt führt diese Axialbewegung nicht nur zu einer Betätigung der Schaltwelle über die geschilderten Zahnräder, sondern auch dazu, dass die Spindelmutter von dem ersten axialen Stellungsbereich in einen zweiten axialen Stellungsbereich bewegt wird, der außerhalb des ersten axialen Stellungsbereichs gelegen ist. Besonders bevorzugt ist das Getriebe des Getriebeaktors in diesem zweiten axialen Stellungsbereich dann so ausgebildet, dass die Spindelmutter in diesem zweiten axialen Stellungsbereich zumindest in einer ersten Drehrichtung der Spindel mit dieser mitdreht, ohne dabei gegenüber der Spindel axial zu wandern. Auf diese Weise kann vorteilhaft besonders einfach ein Schalten von einer Schaltbewegung der Schaltwelle im ersten axialen Stellungsbereich in eine Wählbewegung im zweiten axialen Stellungsbereich umgeschaltet werden. Dies geschieht automatisch durch die axiale Verlagerung der Spindelmutter, wobei die Schaltung dann abgeschlossen ist, wenn die Spindelmutter aus dem Wirkbereich der Verdrehsicherung des ersten axialen Stellungsbereichs herausbewegt wurde. Um auch wieder ein Schalten des Getriebes des Getriebeaktors von der Wählbewegung in die Schaltbewegung der Schaltwelle hinein zu ermöglichen, ist vorteilhafter Weise ein Freilauf vorgesehen, der die Spindelmutter in dem zweiten axialen Bereich auf der Spindel an einer rotativen Bewegung in einer zweiten Drehrichtung, die der ersten entgegengesetzt ist, hindert. Auf diese Weise kommt es durch eine Rotation der Spindel in die zweite Drehrichtung nicht zu einer Drehung der Spindelmutter, was bewirkt, dass sie axial entlang der Spindel bewegt wird, und so von dem zweiten axialen Stellungsbereich in den ersten axialen Stellungsbereich wieder hineinbewegt wird. Der Freilauf wirkt hier quasi als Verdrehsicherung.
Weiterhin ermöglicht der Freilauf vorteilhafter Weise auch, dass immer eine definierte Wählbewegung der Schaltwelle ermöglicht wird, da ausschließlich eine rotative Bewegung der Spindelmutter in der ersten Drehrichtung für eine Umwandlung in eine translatorische Auf-AbBewegung der Schaltwelle, was gleichbedeutend ist einer Heb- und Senkbewegung der Schaltwelle in Längsrichtung der Schaltwelle, zur Verfügung steht.
Um die Steuerung des Motors des Getriebeaktors korrekt durchführen zu können, ist ein Sensor vorgesehen, welcher ein Signal ausgeben soll, welches die axiale Position des Schalthebels der Schaltwelle bzw. der Schaltwelle selber repräsentiert und/oder um eine Schaltbewegung des Schalthebels in die richtige Richtung einleiten zu können, ein Signal ausgibt, welches direkt oder zumindest indirekt Auskunft über die Winkelstellung, das heißt über die umfangsmäßige Positionierung der Verzahnung der Spindelmutter ausgibt. Dieser Sensor ist dafür im Bereich des Übersetzungszahnrads der Spindelmutter, oder eines zwischen diesen Elementen und mit diesem gekoppelten Organs bereitgestellt und kann aus ihrer Stellung bzw. aus ihrer jeweiligen Bewegung ein entsprechendes Signal generieren. So kann das Signal für die axiale Stellung des Schalthebels verwendet werden, um die Auf- und Abbewegung der Schaltwelle zu unterbrechen, in dem der Motor gestoppt wird und/oder die Drehbewegung des Motors in die erste Richtung so lange durchgeführt wird, bis sowohl der Schalthebel in der richtigen Schaltgasse steht, als auch die Verzahnung der Spindelmutter so winkelmäßig orientiert ist, dass das Zahnrad in der ersten axialen Stellung bzw. in dem ersten axialen Stellungsbereich in Eingriff mit der Spindelmutter gebracht werden kann, welches so mit der Schaltwelle gekoppelt ist, dass der Schalthebel in Richtung des gewünschten Ganges bewegt wird. Insbesondere ist hierbei zu beachten, dass die Schaltwelle zwischen zwei Teilgetrieben bereitgestellt sein kann, und die Bewegung des Schalthebels in die eine Richtung das Einlegen eines Ganges im ersten Teilgetriebe und die Bewegung des Schalthebels in die andere Richtung das Einlegen eines Ganges im anderen Teilgetriebe bewirkt.
Es ist erfindungsgemäß ebenfalls vorgesehen, dass die Schaltwelle bzw. der Schalthebel in Kombination mit den Schaltschienen für die einzelnen Teilgetriebe eine Schaltkinematik in der Art eines Active Interlocks® nutzt. Das heißt, das Einlegen eines neuen Ganges bewirkt automatisch das unmittelbar vorherige Auslegen aller übrigen Gänge des gleichen Teilgetriebes. Hierdurch kann es zu keinen blockierenden Gangkombinationen in einem Teilgetriebe kommen. Zur Konstruktion dieser Active Interlock®-Kinematik wird auf die DE 10 2013 203 284 A1 verwiesen, die hiermit in Bezug auf den Aufbau der Geometrie der Schalthebel und Schalt-schienen Bezug genommen.
Zur Umwandlung der rotativen Bewegung der Spindelmutter im zweiten axialen Stellungsbereich in eine translatorische bzw. axiale Bewegung der Schaltwelle ist ein Übersetzungszahnrad vorgesehen, welches mit einem weiteren Zahnrad, auch bezeichnet als zweites Zahnrad, verbunden ist, welches wiederum bevorzugt momentenschlüssig mit der Spindelmutter verbunden werden kann. Das Übersetzungszahnrad weist dabei vorteilhafter Weise ein Übersetzungsverhältnis von 2:1 zu einer Verzahnung auf, die vorzugsweise als Kronenrad ausgebildet n dem Wähltopf angeordnet ist. Hierdurch kann eine genauere Positionierung der Schaltwelle in axialer Richtung erreicht werden, da die axiale Änderung des Schalthebels mittels des Wähltopfs langsamer durchgeführt wird als bei einer 1:1-Übersetzung. Insgesamt wird durch die Rotation der Spindelmutter eine Rotation des Übersetzungszahnrads in gleicher Drehrichtung wie die Spindelmutter erzeugt. Durch das Eingreifen des Übersetzungszahnrad in das Kronenrad des Wähltopfs wird der Wähltopf in einer Ebene 90° versetzt zum Übersetzungszahnrad bzw. im Wesentlichen 90° versetzt zum Übersetzungszahnrad in Rotation versetzt, wobei besonders bevorzugt die Drehachse des Wähltopfs koaxial zur Achse der Schaltwelle verläuft bzw. bevorzugt mit dieser zusammenfällt. Die rotative Bewegung des Wähltopfs um die Schaltwelle herum wird mittels Führungsstiften, die durch eine periodische Bahnkurve des Wähltopfs hindurchgreifen und mit einer gehäusefesten Kulissenbahn verbunden ist, in eine Auf- und Abbewegung der Schaltwelle transformiert. Vorteilhafter Weise ist die Kulissenbahn dabei so ausgeführt, dass sie im Wesentlichen axial parallel zur Schaltwelle, das heißt koaxial zur Schaltwelle, verläuft. Die Führungsstifte unterliegen damit zwei Zwangsbedingungen, die eine Zwangsbedingung ist durch den Verlauf der Kulissenbahn vorgegeben und verhindert im Wesentlichen rotative Bewegungen der Schaltwelle, während die zweite Zwangsbewegung durch die Bahnkurve des Wähltopfs vorgegeben ist, welche sowohl umfangsmäßige, als auch axial verlaufende Anteile aufweist. Hierdurch wird eine Drehung des Wähltopfs in eine Axialbewegung der Führungsstifte und somit in eine Auf- und Abwärtsbewegung der Schaltwelle, was gleichbedeutend ist einer Heb- und Senkbewegung der Schaltwelle in Längsrichtung der Schaltwelle, transformiert.
Es wird ausdrücklich darauf hingewiesen, dass erfindungsgemäß es auch vorgesehen sein kann, dass sich durch eine spezielle Orientierung der Kulissenbahn auch rotative und translatorische Bewegungsanteile der Schaltwelle für eine Schaltbewegung des Schalthebels überlagern können.
Während besonders bevorzugt mittels der Schaltwelle bzw. des Schalthebels auf der Schaltwelle Gänge in einem Getriebe eines Kraftfahrzeugs geschaltet werden können, ist es zusätzlich oder alternativ vorgesehen, dass mittels des Schalthebels auch eine Kupplung oder eine Bremse betätigt werden kann. Dieses kann zum Beispiel dadurch erreicht werden, dass in einem axialen Bereich auf der Schaltwelle statt einer Schaltschiene zum Schalten eines Ganges in einem Getriebe eine Schaltschiene oder allgemein ein Schaltelement zum Betätigen der Kupplung oder der Bremse bereitgestellt ist.

Zur Durchführung eines erfindungsgemäßen Schalt- und/oder Wählvorgangs bzw. zur Betätigung des erfindungsgemäßen Getriebeaktors ist des weiteren eine Steuerung zur Ansteuerung des Getriebeaktors vorgesehen. Diese Steuerung ist hierbei insbesondere als Steuerungsverfahren zur Ansteuerung des Getriebeaktors zu verstehen. Des weiteren kann auch eine Steuerungsanordnung bereitgestellt sein, welche diese Steuerung durchführt.

Hierbei soll insbesondere das Auslegen des bisherigen Ganges so erfolgen, indem der Getriebeaktor zunächst so angesteuert wird, dass er die Spindel in eine erste Richtung antreibt. Da die Spindelmutter an der Verdrehsicherung abgestützt ist und gegen Verdrehungen gesichert ist, wird sie dann axial auf der Spindel wandern und durch einen Eingriff mit einem Zahnrad die translatorische Bewegung der Spindelmutter in eine rotatorische Bewegung der Schaltwelle umführen. Durch die Drehung des Zahnrads wird die Schaltwelle und darüber der Schalthebel so verschwenkt, dass der eingelegte Gang ausgelegt wird und der Schalthebel in eine Neutralgasse verlagert wird.

Befindet sich nun der Schalthebel in der Neutralgasse, so wird gemäß der Steuerung der Schalthebel eine Gasse mit dem gewählten neuen Gang verfahren. Dies wird dadurch erreicht, dass der Motor so angesteuert wird, dass er die Spindel weiterhin in die erste Drehrichtung antreibt. Die Spindelmutter wird dabei aus dem zweiten axialen Stellungsbereich verlagert, so dass sie nicht mehr von der Verdrehsicherung abgestützt wird und beginnt sich in die erste Drehrichtung zu drehen. An dieser Stelle ist die Spindelmutter momentenschlüssig mit dem weiteren Zahnrad verbunden, welches in ein Übersetzungszahnrad eingreift, welches wiederum das Kronenrad des Wähltopfs antreibt und somit über eine Bewegung der Führungsstifte in der Bahnkurve des Wähltopfs und einer Kulissenbahn eine axiale Verlagerung des Schalthebels bewirkt. Zur Ansteuerung des Motors ist weiterhin ein Sensor vorgesehen, der ein Sensorsignal ausgibt. Dieses Sensorsignal wird durch die Steuerung so verarbeitet, dass die Stellung des Schalthebels in der Gasse des gewählten Ganges erkannt wird und entsprechend die Steuerung so verfährt, dass nun ein neuer gewählter Gang eingelegt wird.

Hierfür wird der Motor weiterhin so angesteuert, dass gemäß des Sensorsignals sowohl der Schalthebel in der Gasse des gewählten Ganges liegt, als auch die Verzahnung der Spindelmutter winkelmäßig so positioniert ist, dass sie mit dem Zahnrad in Eingriff gelangen kann, welches für ein Verschwenken des Schalthebels in die Richtung des Teilgetriebes bewirken kann, in welchem der neu gewählte Gang liegt. In Abhängigkeit von diesem Sensorsignal und der Ansteuerung des Motors wird die Drehrichtung des Motors nach Erreichen der beschriebenen Position umgedreht, so dass die Spindelmutter aufgrund des Freilaufs, welcher hier als Verdrehsicherung wirkt, an der Rotation gehindert wird und axial nun wieder in den ersten axialen Stellungsbereich hineinverlagert wird und dort über das mittels der Verzahnung ausgewählte Zahnrad ein Verschwenken des Schalthebels in Richtung des neuen gewählten Ganges bewirkt.

Auf diese Weise wird erreicht, dass alleine mittels des beschriebenen Sensors der Punkt ermittelt wird, an welchem die Drehrichtung des Motors umgedreht wird und eine Wählbewegung in eine Schaltbewegung umgestellt wird.

Es sei darauf hingewiesen, dass zusätzlich auch ein Sensor im Bereich des Motors bereitgestellt sein kann, welcher zumindest Auskunft über die Stellung der Spindel als solche geben kann. Gegebenenfalls erste Kombinationen mit dem zweiten Sensor, welcher die Winkelposition der Spindelmutter bzw. die genaue Stellung des Schalthebels vorgibt, kann dann das beschriebene Steuerungsverfahren zur Ansteuerung des Getriebeaktors durchgeführt werden.

Ein erfindungsgemäßer Getriebeaktor, der in der Erfindung aber nicht beschränkt ist und aus dem sich weitere erfindungsgemäße Merkmale ergeben können, ist in den folgenden Figuren dargestellt. Es zeigen:
- Figur 1a-1c: den Getriebeaktor in unterschiedlichen Schaltpositionen als Systemschaltbild,
- Figur 2a-2c: eine hintere Aufsicht auf einen Teil des Getriebeaktors gemäß den Figuren 1a-1c, und
- Figur 3a-3c: ein H-Schaltbild zur Abstraktion der Schaltbewegung.

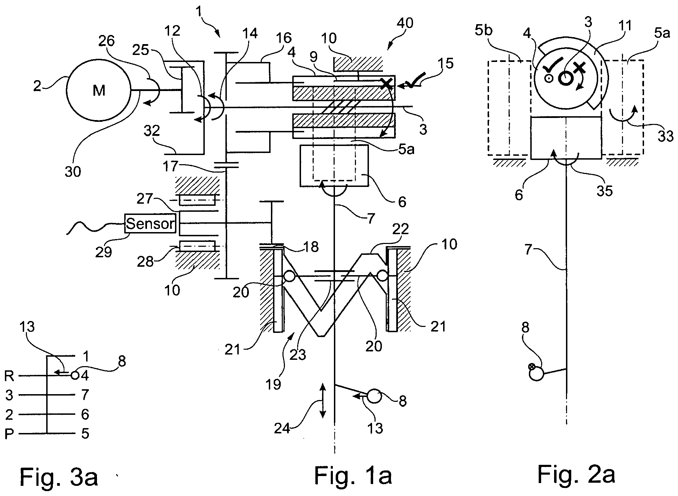

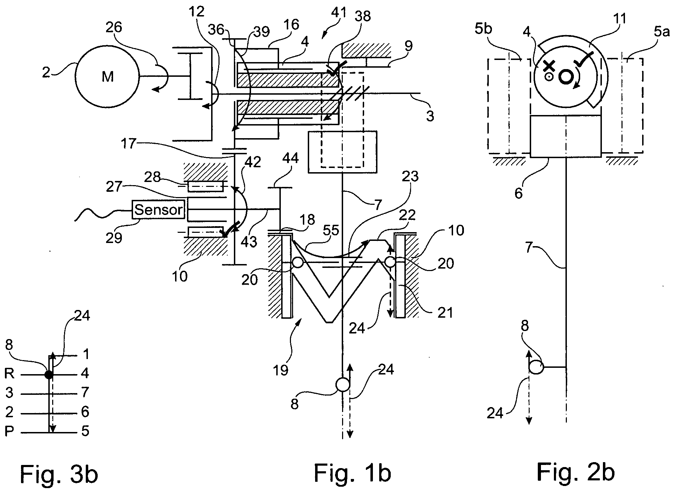

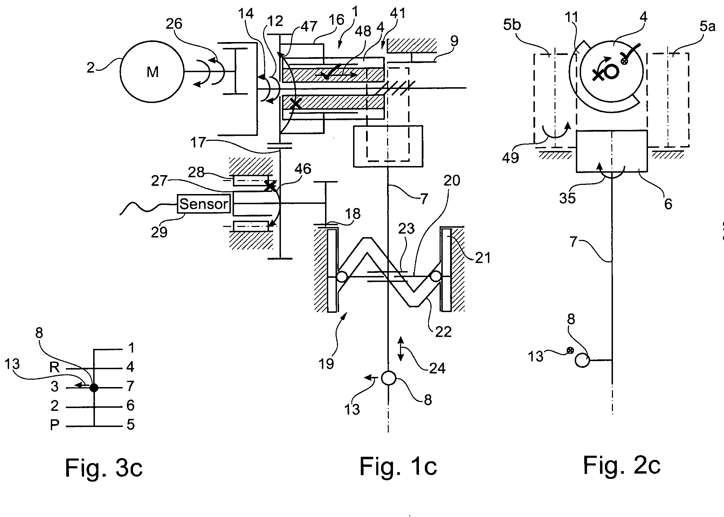

Die Figuren 1a bis 1c zeigen einen Getriebeaktor 1 in unterschiedlichen Stellungen bzw. beim Durchführen unterschiedlicher Verfahrensschritte zum Wählen bzw. Schalten eines neuen Ganges. Mittels eines Motors 2 wird eine Stirnradverzahnung 25 über eine entsprechende Rotorwelle 30 angetrieben. Je nach Drehrichtung des Motors 2 rotiert die Rotorwelle 30 dann in Drehrichtung 26, oder in die entgegen der Drehrichtung 31 und mit ihr entsprechend die Stirnradverzahnung 25. Die Stirnradverzahnung 25 greift dabei in eine Hohlradinnenverzahnung 32 ein, welche hier direkt eine Spindel 3 antreibt. Die Stirnradverzahnung 25 und die Hohlradinnenverzahnung 32 bilden dabei ein Getriebe mit einer Übersetzung von mindestens 1. Je nach Drehrichtung 26, 31 des Motors 2 dreht sich auch die Spindel 3 in eine erste Richtung 12, oder einer dieser entgegengesetzten zweiten Richtung 14.
Auf der Spindel 3 ist eine Spindelmutter 4 angeordnet. In Abhängigkeit von der Stemmung der Spindelmutter 4 auf der Spindel 3 ist die Spindelmutter 4 in Eingriff mit einem der Zahnräder 5a, 5b, auch bezeichnet als erste Zahnräder 5a, 5b. Die Figur 2a zeigt hierfür einen Schnitt durch die Anordnung des Getriebeaktors 1 aus der Rückenansicht. Die Spindelmutter 4 ist, wie in der Figur 2a dargestellt, als Zahnstange mit einer einseitigen Verzahnung 11 ausgebildet. Je nach Winkelposition der Spindelmutter 4 ist diese Verzahnung 11 in Eingriff mit dem Zahnrad 5a oder 5b. Beide Zahnräder 5a und 5b sind dabei fest mit einem Wellenrad 6 einer Schaltwelle 7 verzahnt. An der Schaltwelle 7 selber ist ein Schalthebel 8 angeordnet, der wenigstens einen Schaltfinger und mehrere Auswerfernocken umfasst. Die Auswerfernocken des Schalthebels 8 sind dabei so ausgebildet, dass sie in der Art eines "Active Interlocks"® mit hier nicht dargestellten Schaltschienen der Teilgetriebe interagieren können. Zur Wirkung solch eines Active Interlocks® und zum Aufbau solch eines Active Interlocks® wird hier auf die nicht veröffentlichte DE 10 2013 203 284 der Anmelderin verwiesen, auf deren Inhalt hierzu Bezug genommen wird.
Über die Verzahnung 11 greift die Spindelmutter 4 je nach Winkelstellung immer nur in genau ein Zahnrad 5a oder 5b ein. In dem dargestellten Fall der Figur 2 greift die Verzahnung 11 in das rechte Zahnrad 5a ein. Eine axiale Verstellung der Spindelmutter 4 bewirkt dann bei einer Bewegung in Richtung 15 gemäß Figur 1a eine Drehung 33 des rechten Zahnrads 5a. Diese Drehung 33 resultiert dann in eine Drehung 35 des Wellenrads 6, wodurch der Schalthebel 8 in die erste Richtung 13 verschwenkt wird und so aus seinem eingelegten Gang ausgelegt wird. In der Figur 3a ist ein H-Schaltbild dargestellt, welches zeigt, dass in den Figuren 1a und 2a der Schalthebel 8 in einem Gang 4 eingelegt ist. Eine Drehung 35 des Wellenrads 6 bewirkt damit ein Auslegen des Schalthebels 8 in Richtung 13 aus dem Gang 4. In den Figuren 1a und 2a ist die Situation gezeigt, in der sich die Spindelmutter 4 in einem ersten axialen Stellungsbereich 40 der Spindel 3 befindet. Hier ist die Spindelmutter 4 an einer Verdrehsicherung in Form eines Abstützelements 9 gegen Verdrehungen gesichert. Das Abstützelement 9 ist dafür mit einem Gehäuse 10 fest verbunden. Eine Drehung des Motors 2 verursacht bei dieser Stellung immer eine axiale Bewegung der Spindelmutter 4. Eine Drehung in die erste Richtung 12 entspricht dabei einer axialen Bewegung 15 auf den Motor zu. Dieses verursacht dann durch den Eingriff zwischen der Verzahnung 11 und dem rechten Zahnrad 5a die geschilderte Bewegung des Schalthebels 8. Gleichzeitig bewegt sich dabei die Spindelmutter 4 axial in Richtung 15 aus dem Wirkungsbereich des Abstützelements 9 heraus und gelangt in den Wirkungsbereich des Zahnrads 16, welches auch als weiteres oder zweites Zahnrad 16 bezeichnet wird. Da aber die Spindelmutter 4 in dem Bereich wo sie über das Abstützelement 9 gegen Verdrehungen gesichert ist noch nicht rotativ bewegt wird, bleibt das Zahnrad 16 stillstehend. Dieser Stillstand des Zahnrads 16 ist zumindest so lange gegeben, bis der Auslegevorgang des Schalthebels 8 bezüglich des Ganges 4, wie in der Figur 3a gezeigt ist, abgeschlossen ist. Nach Abschluss des Auslegevorgangs befindet sich der Schalthebel 8 in der neutralen Gasse. Er kann dann frei axial entlang der Schaltwelle 7 in Richtung der Wählbewegung 24, wie in der Figur 1a gezeigt, bewegt werden.
Erst wenn die Spindelmutter 4 vollständig aus dem ersten axialen Stellungsbereich 40 hinausgetreten ist und den Wirkkontakt mit dem Abstützelement 9 verloren hat, ist eine Wählbewegung 24 möglich, welche in den Figuren 1b, 2b und 3b dargestellt ist. Wie zu den Figuren 1a bis 3a beschrieben wurde, wird die Auslegebewegung des Ganges, das heißt die Verschwenkung des Schalthebels 8, mittels einer Rechtsdrehung des Motors 2 bewirkt. Hieraus resultiert auch eine Rechtsdrehung der Spindel 3 und damit eine axiale Verstellung der Spindelmutter 4 nach links in der Zeichnung. Mit dem Verlassen des ersten axialen Stellungsbereichs 40 wird die Spindelmutter 4 nicht mehr von dem Abstützelement 9 abgestützt und ist nicht mehr gegen Verdrehen gesichert. Spätestens wenn die Spindelmutter 4 an das Spindelmutterzahnrad 37 anstößt, verdreht es im gleichen Sinne und mit gleicher Geschwindigkeit wie die Spindel 3. Der Schalthebel 8 befindet sich dann in der Neutralgasse. Ohne Änderung der Motordrehrichtung 26 startet dann der Wählvorgang des Getriebeaktors 1. Der Motor 2 dreht weiter in Richtung 26, was, wie beschrieben, in einer Rechtsdrehung 38 der Spindelmutter 4 resultiert, was sich über das Zahnrad 16 entsprechend auf das Spindelmutterzahnrad 37 überträgt, welches sich dann auch in Drehrichtung 39 dreht. Über die Verzahnung mit dem Übersetzungszahnrad 17 wird dieses in eine entgegengesetzte Richtung 42 gedreht.
Das Übersetzungszahnrad 17 ist auf der motorzugewandten Seite mit einer Verzahnung 27 in einem Freilauf 28 so gelagert, dass die Linksdrehrichtung 42 des Übersetzungszahnrads 17 erlaubt ist. Auf der Drehachse 43 des Übersetzungszahnrads 17 ist ein Zahnrad 44 angeordnet, welches die Drehbewegung 42, das heißt die Bewegung der Spindelmutter in Richtung 38 über eine momentenschlüssige Verbindung, über ein Kronenrad 18 an den Wähltopf 19 weitergibt. Die Rechtsdrehung der Spindelmutter 4 in Richtung 38 wird dadurch in eine Rechtsdrehung des Wähltopfs 19 umgewandelt. Der rechtsumdrehende Wähltopf 19 dreht sich somit in Richtung 45 und transformiert mit Hilfe der auf seinem Umfang angeordneten Bahnkurve 22 und einer gehäusefesten Kulissenbahn 21 die Drehbewegung in Richtung 45 in eine Auf- und Abwärtsbewegung der Führungsstifte 20, die durch die Bahnkurve 22 in die Kulissenbahn 21 eingreifen und mit der Schaltwelle 7 verbunden sind. Die Verbindung der Führungsstifte 20 mit der Schaltwelle 7 ist hier über Verbindungsstellen 23 der Schaltwelle 7 realisiert. Diese Auf- und Abbewegung der Führungsstifte 20 entspricht damit einer Wählbewegung 24 des Schalthebels 8 in seiner neutralen Stellung. In dem hier dargestellten Fall verläuft die Kulissenbahn 21 parallel zur Schaltwelle 7. Die Bahnkurve 22 verläuft umfangsmäßig um den Wähltopf 19 herum in Art einer Zick-Zack-Kurve. Hier wäre auch eine Sinuskurve denkbar. In dem hier dargestellten Fall sind zwei Führungsstifte 20 vorgesehen, die in jeweils entgegengesetzt angeordneten Kulissenbahnen 21 eingreifen. Die Bahnkurve 22 ist daher so gestaltet, dass sie umfangsmäßig periodisch wiederkehrt und zwischen den beiden Kulissenbahnen 21 wenigstens eine ganzzahlige Periode der Bahnkurve 22 liegt. Auf diese Weise ist gewährleistet, dass die Bewegungsrichtung der beiden Führungsstifte 20 immer jeweils in die gleiche Richtung 24 zeigt.

Durch die Verbindung der Führungsstifte 20 mit der Schaltwelle 7 wird die gesamte Schaltfingereinheit, das heißt der Schalthebel 8, in der neutralen Gasse so lange gehoben oder gesenkt, das heißt es wird eine Wählbewegung 24 so lange ausgeübt, wie sich der Motor 2 im Rechtslauf 26 befindet. Über ein Sensor 29, welcher im Bereich der Verzahnung 27 am Freilauf 28 bereitgestellt ist, kann die Anzahl der Umdrehungen des Zahnrads 44 in Drehrichtung 42 überwacht werden. Da das Verhältnis zwischen Kronenrad 18 und Zahnrad 44 bezüglich der Übersetzung bekannt ist, kann aus der Anzahl der Umdrehungen des Übersetzungszahnrads 17 in Drehrichtung 42 direkt auf die Stellung der Führungsstifte 20 und damit auf die Position des Schalthebels 8 geschlossen werden. Bei Erreichen der Zielgasse, in diesem Fall in Figur 3b durch den Punkt zwischen dem dritten und dem siebten Gang, wird die Auf- und Abwärtsbewegung der Schaltwelle gestoppt. Jeder Zielpunkt in der Neutralgasse für den Schalthebel 8 kann dabei während der Wählbewegung 24 von oben oder unten angefahren werden. Durch das Übersetzungsverhältnis zwischen Spindelmutter 4 und Wähltopf 19 bzw. Kronenrad 18 entscheidet diese Anfahrtsrichtung über die winkelmäßige Stellung der Verzahnung 11 der Spindelmutter 4. Wie bereits angesprochen, entscheidet diese Winkelposition der Verzahnung 11 darüber, welches Zahnrad 5a oder 5b zum Verschwenken der Schaltwelle 7, das heißt zum Schalten des Schalthebels 8, betätigt wird. Hieraus resultiert dann das Einlegen des einen oder anderen Gangs, in diesem Fall zum Beispiel des dritten oder siebten Gangs, gemäß Figur 3b. Der Sensor 29 ermittelt daher die Position des Führungstopfs 19 und damit der Führungsstifte 20 exakt so, dass sowohl die Zielposition des Schalthebels 8, als auch die Winkelposition der Verzahnung 11 der Spindelmutter 4 in Abhängigkeit vom gewünschten nächsten Gang angefahren wird. Genau dann wird die Rotation 26 des Motors 2 angehalten.

Vor der Zielgasse wird die Motordrehrichtung von einer Rechtsdrehung 26 in eine Linksdrehung 31 umgeschaltet. Damit dreht auch die Spindel 3 nun auch in die zweite Richtung 14, das heißt nach links. Die Spindelmutter 4 könnte nun entweder mit der Spindel 3 mitdrehen, oder nach rechts verschoben werden. Über das Zahnrad 16 ist die Spindelmutter 4 über das Übersetzungszahnrad 17 und die Verzahnung 27 mit dem Freilauf 28 verbunden, welcher die Drehung des Übersetzungszahnrads 17 in eine Drehrichtung 46 entgegengesetzt zur Drehrichtung 42, das heißt nach rechts, verhindert, das heißt das Übersetzungszahnrad 17 und damit auch die Spindelmutter 4 gegen eine entsprechende Verdrehung sperrt. Eine Drehung der Spindelmutter 4 in Linksrichtung 47 ist somit nicht möglich und dieser rotatorische Freiheitsgrad der Spindelmutter 4 ist in diesem zweiten axialen Stellungsbereich 41, in dem die Spindelmutter 4 mit dem Zahnrad 16 gekoppelt ist, gesperrt. Sie kann daher bei einer Drehung 31 des Motors 2 nach links dieser Linksdrehung in die zweite Richtung 14 der Spindel 3 nicht folgen und kann nur rotatorisch in Richtung 48 nach rechts bewegt werden. Durch diese Sperrung des Übersetzungszahnrads 17 durch den Freilauf 28 wird entsprechend eine Drehmomentübertragung vom Motor 2 auf die Wählkinematik verhindert. Der Wähltopf 19 wird nicht verdreht, wodurch eine Wählbewegung 24 des Schalthebels 8 verhindert wird. Je nach gewünschtem Zielgang befindet sich die Verzahnung 11 der Spindelmutter 4 dann auf der von hinten gesehenen linken oder rechten Seite, wobei links ein Eingriff mit dem Zahnrad 5b und rechts ein Eingriff mit dem Zahnrad 5a möglich ist. Dieses ist so in Figur 2c dargestellt. Für den hier dargestellten Fall, dass als Zielgang der Gang drei durch die Elektronik bestimmt ist, ist der Motor 2 entsprechend so angehalten worden, dass sich der Schalthebel 8 in seiner Endposition in der Neutralgasse zwischen den Gängen drei und sieben befindet, während sich gleichzeitig die Winkelposition der Verzahnung 11 so ergibt, dass sie in das Zahnrad 5b zum Verschwenken der Schaltwelle 7 eingreifen kann. In den Figuren 1c, 2c und 3c ist nun dargestellt, wie die Umsetzung der Drehung des Motors 2 nach links 31 in ein Einlegen des Schalthebels 8 in die erste Richtung 13 zum Einlegen des dritten Gangs resultiert. Die translatorische Bewegung der Spindelmutter 4 in Richtung 48 resultiert in einer Verdrehung des linken Zahnrads 5b gemäß Figur 2c in die Papierebene hinein, das heißt in eine Drehrichtung 49 nach rechts in Bezug auf seine Drehachse. Durch die Verbindung zwischen Zahnrad 5b und Wellenrad 6 der Schaltwelle 7 resultiert diese Rechtsdrehung 49 nun wieder in eine Linksdrehung 35 des Wellenrads 6 und damit der Schaltwelle 7. Das rechte Zahnrad 5a ist dabei nicht mit der Verzahnung 11 der Spindelmutter 4 verbunden und dreht sich frei mit dem Wellenrad 6 mit. Die Verdrehung der Schaltwelle 7 in Drehrichtung 35 resultiert dann in einem Verschwenken des Schalthebels 8 in die erste Richtung 13, was bedeutet, dass der Schaltfinger des Schalthebels 8 eine hier nicht dargestellte Schaltschiene entsprechend bewegt und den neuen Gang 3 gemäß Figur 3c einlegt.

In den vorangegangenen Figuren wurde das Auslegen des ersten und Einlegen des dritten Gangs exemplarisch dargestellt. Hierbei wurde darauf verzichtet, die Funktion eines im Schalthebel 8 und in den nicht dargestellten Schaltschienen bereitgestellten "Active Interlocks"® explizit darzustellen. Hierdurch wird vor dem Einlegen eines neuen Gangs immer gewährleistet, dass alle übrigen Gänge ausgelegt sind. Des weiteren ist die Anordnung der einzelnen Zahnräder hier nur exemplarisch anzusehen. Insbesondere kann die Kopplung der Spindelmutter 4 mit dem Übersetzungszahnrad 17 auch auf der entgegengesetzten Seite der Schaltwelle 7 bzw. des Abstützelements 9 vorgesehen sein. Hieraus würde resultieren, dass die Spindelmutter 4 sich translatorisch nach rechts bewegen würde, um den Gang auszulegen und nach links, um einen Gang einzulegen. Des weiteren könnten die Sperrrichtungen von Abstützelement 9 bzw. Verdrehsicherung 9 und Freilauf 28 jeweils in entgegengesetzter Richtung wirken, wodurch sich im Wesentlichen nur die Drehrichtung des Wähltopfs 19 ändern würde.

Insgesamt wird auf einfache Weise realisiert, dass eine Drehung des Motors 2 in eine erste Drehrichtung 26 ein vollständiges Auslegen der eingelegten Gänge und ein Verfahren des Schalthebels 8 in die Neutralgasse, verbunden mit einem anschließenden Wählvorgang, durch eine Wählbewegung 24 des Schalthebels 8 bewirkt, während die Umkehrung der Drehung des Motors 2 in Richtung 31 wiederum das Einlegen des gewünschten Gangs durch den Schalthebel 8 bewirkt. Hierbei muss insbesondere auf die Funktion des Sensors 29 hingewiesen werden, welcher zusätzlich zu einem möglichen Sensor im Bereich des Motors 2 bereitgestellt sein muss, um hier über die Anzahl der Drehungen der Verzahnung 27, das heißt über die Umdrehungen des Wähltopfs 19, sowohl die genaue Position des Schalthebels 8 in der Neutralgasse, als auch die Winkelposition der Verzahnung 11 der Spindelmutter 4 zu bestimmen. Nur auf diese Weise kann exakt das Schalten des Schalthebels 8 in Richtung 13 für das Einlegen des gewünschten Gangs im richtigen Teilgetriebe gewährleistet werden.

### Bezugszeichenliste

1 Getriebeaktor
2 Motor
3 Spindel
4 Spindelmutter
5a,b Zahnrad oder erstes Zahnrad
6 Wellenrad
7 Schaltwelle
8 Schalthebel
9 Abstützelement
10 Gehäuse
11 Verzahnung
12 erste Richtung
13 erste Richtung
14 zweite Richtung
15 Bewegung
16 Zahnrad oder weiteres bzw. zweites Zahnrad
17 Übersetzungszahnrad
18 Kronenrad
19 Wähltopf
20 Führungsstifte
21 Kulissenbahn
22 Bahnkurve
23 Verbindungsstelle
24 Wählbewegung
25 Stirnradverzahnung
26, 31 Drehung
27 Verzahnung
28 Freilauf
29 Sensor
30 Rotorwelle
32 Hohlradinnenverzahnung
33 Drehung
35 Drehung
37 Spindelmutterzahnrad
38 Drehung
39 Drehung
40 erster axialer Stellungsbereich
41 zweiter axialer Stellungsbereich
42 Drehrichtung
43 Drehachse
44 Zahnrad
45 Richtung
46 Drehrichtung
47 Linksrichtung
48 Richtung
49 Drehrichtung

## Patentansprüche

1. Getriebeaktor mit genau einem Motor (2),
einer von dem Motor (2) angetriebenen Spindel (3),
einer mit der Spindel (3) in Wirkverbindung stehenden Spindelmutter (4),
einer mit der Spindelmutter (4) wenigstens indirekt wirkverbundenen Schaltwelle (7), wobei die Spindelmutter (4) eine erste und eine zweite Bewegungsart aus der Menge rotative und translatorische Bewegungen ausführen kann, wobei die erste von der zweiten Bewegungsart verschieden ist,
umfassend weiter wenigstens ein Getriebe, mittels dessen die erste Bewegungsart der Spindelmutter (4) in eine Wählbewegung der Schaltwelle (7) umgewandelt wird
**dadurch gekennzeichnet, dass**
das wenigstens eine Getriebe
die Spindelmutter (4), ein Übersetzungszahnrad (17) und einen Wähltopf (19) mit einer mit einer auf seinem Umfang angeordneten periodischen Bahnkurve (22), die mit der Schaltwelle (7) wirkverbunden ist und in einem zweiten axialen Stellungsbereich der Spindelmutter (4) eine rotative Bewegung der Spindelmutter (4) in eine im Wesentlichen periodisch wiederkehrende Heb- und Senkbewegung der Schaltwelle (7) in Längsrichtung der Schaltwelle (7) als Wählbewegung umwandelt, aufweist.

2. Getriebeaktor nach Anspruch 1, **dadurch gekennzeichnet, dass** das wenigstens eine Getriebe die zweite Bewegungsart der Spindelmutter (4) in eine Schaltbewegung der Schaltwelle (7) umwandelt.

3. Getriebeaktor nach Anspruch 2, **dadurch gekennzeichnet, dass** das wenigstens eine Getriebe die Spindelmutter (4), zwei erste Zahnräder (5a,5b) und ein Wellenrad (6), welches mit der Schaltwelle (7) verbunden ist und in einem ersten axialen Stellungsbereich (40) der Spindelmutter (4) eine translatorische Bewegung der Spindelmutter (4) über genau eines der ersten Zahnräder (5a,5b) in eine rotative Bewegung der Schaltwelle (7) als Schaltbewegung umwandelt, aufweist.

4. Getriebeaktor nach Anspruch 3, **dadurch gekennzeichnet, dass** die ersten Zahnräder (5a,5b) voneinander entkoppelt sind, so dass in dem ersten axialen Stellungsbereich (40) immer nur genau ein erstes Zahnrad (5a,5b) in direkter oder indirekter Wirkverbindung mit der Spindelmutter (4) ist und eine Schaltbewegung der Schaltwelle (7) in eine Richtung (13) bewirkt, wobei das Verschenken des ersten Zahnrades (5a) ein Verschwenken der Schaltwelle in eine erste Richtung (13) und das Verschwenken des zweiten Zahnrades (5b) ein Verschwenken der Schaltwelle (7) in ein zweite Richtung, entgegengesetzt zur ersten Richtung (13) bewirkt.

5. Getriebeaktor nach Anspruch 4, **dadurch gekennzeichnet, dass** die Spindelmutter (4) als Zahnstange mit einer Verzahnung (11) ausgebildet ist, wobei sich die Verzahnung (11) über einen Teilumfang der Spindelmutter (4) umfangsmäßig so erstreckt, dass die Spindelmutter (4) wenigstens zwei unterschiedliche Winkelpositionen einnehmen kann, in denen die Verzahnung (11) bei einer translatorischen Bewegung der Spindelmutter (4) ausschließlich in das eine oder das andere erste Zahnrad (5a, 5b) eingreift.

6. Getriebeaktor nach einem der Ansprüche 3 bis 5, **dadurch gekennzeichnet, dass** eine Verdrehsicherung (9) vorgesehen ist, mittels welcher die Spindelmutter (4) in dem ersten axialen Stellungsbereich (40) gegenüber einem Gehäuse (10) gegen Verdrehungen gesichert ist, wobei die Spindelmutter (4) in diesem ersten axialen Stellungsbereich (40) axialbeweglich ist, und dass die Spindelmutter (4) in einem zweiten axialen Stellungsbereich (41), der außerhalb des ersten axialen Stellungsbereichs (40) gelegen ist, oder einem zweiten axialen Stellungsbereich (41), der außerhalb des ersten axialen Stellungsbereichs (40) gelegen ist, bei einer Drehung der Spindel (3) in einer ersten der beiden Drehrichtungen mit dieser Spindel (3) mitdreht, ohne dabei gegenüber der Spindel (3) axial zu wandern.

7. Getriebeaktor nach wenigstens einem der vorigen Ansprüche, **dadurch gekennzeichnet, dass** ein Freilauf (28) vorgesehen ist, der die Spindelmutter (4) in dem zweiten axialen Stellungsbereich (40) auf der Spindel (3) an einer rotative Bewegung in eine zweite Drehrichtung hindert, so dass eine rotative Bewegung der Spindelmutter (4) zur Bewirkung der Wählbewegung der Schaltwelle (7) ausschließlich nur in einer ersten Drehrichtung möglich ist.

8. Getriebeaktor nach Anspruch 6, **dadurch gekennzeichnet, dass** die Spindelmutter (4) in dem zweiten axialen Stellungsbereich (41) auf der Spindel (3) über ein Überset- zungszahnrad (17) mit einem Freilauf (28) gekoppelt ist, bei einer Rotation der Spindel (3) in eine zweite Richtung der Freilauf (28) die Spindelmutter (4) gegen eine Rotationsbewegung abstützt und als Verdrehsicherung wirkt, so dass durch die Rotation der Spindel (3) in die zweite Richtung eine axiale Bewegung der Spindelmutter (4) von dem zweiten axialen Stellungsbereich (41) in den ersten axialen Stellungsbereich (40) auf der Spindel (3) bewirkt wird.

9. Getriebeaktor nach einem der Ansprüche 3 bis 6 und 8, **dadurch gekennzeichnet, dass** wenigstens ein Sensor (29) vorgesehen ist, der die Stellung eines der Elemente Übersetzungszahnrad (17), Spindelmutter (4) oder eines zwischen diesen Elementen und mit diesen gekoppelten Organs erfasst und so ein Signal für die axiale Position der Schaltwelle (7), bzw. eines Schalthebels (8) der Schaltwelle (7) in Bezug auf eine Zielgasse und/oder ein Signal für die umfangsmäßige Positionierung der Verzahnung (11) in Bezug auf die ersten Zahnräder (5a,5b) erzeugt, welches für die Steuerung des Motors (2) verwendet werden kann um gezielt einen ausgewählten Gang mittels des Schalthebels (8) einzulegen, indem der Schalthebel (8) in der ausgewählten Gasse gelassen wird und mittels der Spindelmutter (4) in genau eines der ersten Zahnräder (5a,5b) zur Verschwenkung des Schalthebels (8) in die gewünschte Richtung zur Schaltung des gewünschten Ganges eingegriffen wird.

10. Getriebeaktor nach einem der Ansprüche 1 bis 9, **dadurch gekennzeichnet, dass** das wenigstens eine Getriebe zur Umwandlung der Bewegungsart der Spindelmutter (4) ein Übersetzungszahnrad (17) umfasst, welches in dem zweiten axialen Stellungsbereich (41) der Spindelmutter (4) vorzugsweise über ein zweites Zahnrad (16) momentenschlüssig mit der Spindelmutter (4) verbunden werden kann,
das Übersetzungszahnrad (17) vorzugsweise mit einem Übersetzungsverhältnis von 2:1 mit einer Verzahnung, vorzugsweise einem Kronenrad, mit dem Wähltopf (19) verbunden ist, wodurch eine Rotation der Spindelmutter in die erste Drehrichtung ein Drehung des Wähltopfes (19) um die Schaltwelle (7) herum bewirkt,
der Wähltopf (19) um seine Achse herum verdreht werden kann, wobei diese Achse koaxial zur Achse der Schaltwelle (7) verläuft und vorzugsweise mit dieser zusammenfällt,
die Schaltwelle (7) mittels Führungsstiften (20), die durch die periodische Bahnkurve des Wähltopfes (19) hindurchgreifen mit dem Wähltopf gekoppelt ist, und eine gehäusefeste Kulissenbahn (21) vorgesehen ist, in die Führungsstifte (20) eingreifen, wodurch durch die Überlagerung der Bewegungen der Führungsstifte (20) in der Bahnkurve (22) und in der Kulissenbahn (21) die Drehbewegung der Spindelmutter (4) in eine Heb- und Senkbewegung (24) der Schaltwelle (7) in Längsrichtung der Schaltwelle (7) transformiert wird.

11. Getriebeaktor nach einem der vorigen Ansprüche, **dadurch gekennzeichnet, dass** zusätzlich oder alternativ zu einer Schaltung eines Ganges in einem Getriebe mittels des Schalthebels eine Kupplung oder eine Bremse betätigt wird.

12. Verfahren zur Ansteuerung eines Getriebeaktors (1) nach einem der Ansprüche 3 bis 6, 8 und 9 **dadurch gekennzeichnet, dass** die folgenden Verfahrensschritte durchgeführt werden; wenn ein neuer Gang gewählt wird:
i) Auslegen des bisherigen Ganges, indem,
der Motor (2) des Getriebeaktors so angesteuert wird, dass er zunächst die Spindel (3) in eine erste Drehrichtung (12) antreibt,
wobei die Spindelmutter (4) in einem ersten axialen Stellungsbereich (40) der Spindelmutter (4) durch ein Verdrehsicherung (9) gegen Verdrehungen gesichert ist und axial auf der Spindel (3) wandert und mit einem ersten Zahnrad (5a,5b) so in Eingriff steht, dass durch die axiale Bewegung der Spindelmutter (4) das erste Zahnrad (5a,5b) die Schaltwelle (7) und darüber einen Schalthebel (8) an der Schaltwelle (7) so verschwenkt, dass der eingelegte Gang ausgelegt wird und der Schalthebel (8) in eine Neutralgasse verlagert wird,
ii) Verfahren des Schalthebels (8) in eine Gasse mit dem gewählten neuen Gang, indem
der Motor (2) nachdem der Gang ausgelegt wurde so angesteuert wird, dass er die Spindel (3) weiter in die erste Drehrichtung (12) antreibt, so dass die Spindelmutter (4) aus dem ersten axialen Stellungsbereich (40) der Spindelmutter (4) in einen zweiten axialen Stellungsbereich (41) der Spindelmutter (4) ohne Verdrehsicherung (9) axial verlagert wird,
die Spindelmutter (4) im zweiten axialen Stellungsbereich (41) der Spindelmutter (4) einen Momentenschluss mit einem zweiten Zahnrad (16) eingeht, die Drehung der Spindelmutter (4) über das zweite Zahnrad (16), ein mit diesem verzahnten Übersetzungszahnrad (17) und ein Kronenrad (18) auf einen Wähltopf (19) übertragen wird,
die Drehbewegung des Wähltopfes (19) eine periodische Heb- und Senkbewegung
der Schaltwelle (7) in Längsrichtung der Schaltwelle (7) über Führungsstifte (20) bewirkt,
und so der Schalthebel (8) axial mit der Schaltwelle (7) in die Gasse des gewählten neuen Ganges verlagert wird, wobei die Steuerung in Abhängigkeit eines Sensorsignals eines Sensors (29) die Stellung des Schalthebels (8) in der Gasse des gewählten Ganges erkennt,
iii) Einlegen des gewählten neuen Ganges, indem
in Abhängigkeit von der Lage des gewählten Ganges in Bezug auf die Schaltwelle (7)
der Motor (2) so angesteuert wird, dass er die Spindel (3) so in die erste Drehrichtung (12) antreibt, dass Spindelmutter (4) so verdreht wird, dass ihre Winkellage der einer Position entspricht, bei der eine Verzahnung (11) der Spindelmutter (4) in dem ersten axialen Stellungsbereich (40) mit genau einem der ersten Zahnräder (5a, 5b) in Eingriff kommen kann, welches ein Verschwenken der Schaltwelle (7) und damit des Schalthebels (8) in Richtung des gewählten neuen Ganges bewirken kann, die Drehrichtung des Motors (2) in die entgegengesetzte Richtung zur ersten Drehrichtung (12) umgestellt wird, so dass die Spindelmutter (4) auf Grund eines Freilaufs (28) an dem Übersetzungszahnrad (17) an einer Verdrehung gehindert und infolgedessen axial in Richtung des ersten axialen Stellungsbereichs (40) verlagert wird und dort über einen Eingriff der Verzahnung (11) in das besagte erste Zahnrad (5a,5b) ein Verschwenken des Schalthebels (8) zum Einlegen des neuen gewählten Ganges bewirkt.

## Claims

1. Gearbox actuator having exactly one motor (2), having a spindle (3) driven by the motor (2), having a spindle nut (4) operatively connected to the spindle (3),
having a shift shaft (7) at least indirectly operatively connected to the spindle nut (4),
wherein the spindle nut (4) can perform a first and a second type of movement from the set of rotational and translational movements, wherein the first type of movement differs from the second type of movement,
furthermore comprising at least one gearing by means of which the first type of movement of the spindle nut (4) is converted into a selector movement of the shift shaft (7),
**characterized in that**
the at least one gearing has the spindle nut (4), a transmission toothed gear (17) and a selector pot (19) with a with a periodic curved path (22) arranged on its circumference, which curved path is operatively connected to the shift shaft (7) and, in a second axial position range of the spindle nut (4), converts a rotational movement of the spindle nut (4) into a substantially periodically repeating raising and lowering movement of the shift shaft (7) in a longitudinal direction of the shift shaft (7) as a selector movement.

2. Gearbox actuator according to Claim 1, **characterized in that** the at least one gearing converts the second type of movement of the spindle nut (4) into a shift movement of the shift shaft (7).

3. Gearbox actuator according to Claim 2, **characterized in that** the at least one gearing has the spindle nut (4), two first toothed gears (5a, 5b) and a shaft gear (6) which is connected to the shift shaft (7) and which, in a first axial position range (40) of the spindle nut (4), converts a translational movement of the spindle nut (4) by means of exactly one of the first toothed gears (5a, 5b) into a rotational movement of the shift shaft (7) as a shift movement.

4. Gearbox actuator according to Claim 3, **characterized in that** the first toothed gears (5a, 5b) are decoupled from one another such that, in the first axial position range (40), always only exactly one first toothed gear (5a, 5b) is in direct or indirect operative connection with the spindle nut (4) and effects a shift movement of the shift shaft (7) in one direction (13), wherein the pivoting of the first toothed gear (5a) effects a pivoting of the shift shaft in a first direction (13), and the pivoting of the second toothed gear (5b) effects a pivoting of the shift shaft (7) in a second direction which is opposite to the first direction (13).

5. Gearbox actuator according to Claim 4, **characterized in that** the spindle nut (4) is formed as a toothed rack with a toothing (11), wherein the toothing (11) extends circumferentially over a partial circumference of the spindle nut (4) such that the spindle nut (4) can assume at least two different angular positions in which the toothing (11), during a translational movement of the spindle nut (4), engages exclusively into one or the other first toothed gear (5a, 5b).

6. Gearbox actuator according to one of Claims 3 to 5, **characterized in that** a rotation prevention means (9) is provided, by means of which the spindle nut (4), in the first axial position range (40), is secured against rotation relative to a housing (10), wherein the spindle nut (4) is axially movable in said first axial position range (40), and **in that**, in a second axial position range (41) which is situated outside the first axial position range (40), or in a second axial position range (41) which is situated outside the first axial position range (40), in the event of a rotation of the spindle (3) in a first of the two directions of rotation, the spindle nut (4) corotates with said spindle (3) without moving axially relative to the spindle (3) in the process.

7. Gearbox actuator according to at least one of the preceding claims, **characterized in that** a freewheel (28) is provided which prevents the spindle nut (4), in the second axial position range (40), from performing a rotational movement in a second direction of rotation on the spindle (3), such that a rotational movement of the spindle nut (4) for effecting the selector movement of the shift shaft (7) is possible only exclusively in a first direction of rotation.

8. Gearbox actuator according to Claim 6, **characterized in that** the spindle nut (4), in the second axial position range (41) on the spindle (3), is coupled by means of a transmission toothed gear (17) to a freewheel (28), in the event of a rotation of the spindle (3) in a second direction, the freewheel (28) supports the spindle nut (4) against a rotational movement and acts as a rotation prevention means, such that an axial movement of the spindle nut (4) from the second axial position range (41) into the first axial position range (40) on the spindle (3) is effected by means of the rotation of the spindle (3) in the second direction.

9. Gearbox actuator according to one of Claims 3 to 6 and 8, **characterized in that** at least one sensor (29) is provided which detects the position of one of the elements out of transmission toothed gear (17), spindle nut (4) or a member coupled between and to said elements, and which thus generates a signal for the axial position of the shift shaft (7), or of a shift lever (8) of the shift shaft (7), in relation to a target shift gutter and/or a signal for the circumferential positioning of the toothing (11) in relation to the first toothed gears (5a, 5b), which signal can be used for controlling the motor (2) in order to engage a selected gear ratio by means of the shift lever (8) in targeted fashion by virtue of the shift lever (8) being left in the selected shift gutter and exactly one of the first toothed gears (5a, 5b) being engaged into by means of the spindle nut (4) in order to pivot the shift lever (8) in the desired direction for the purposes of shifting the desired gear ratio.

10. Gearbox actuator according to one of Claims 1 to 9, **characterized in that** the at least one gearing for converting the type of movement of the spindle nut (4) comprises a transmission toothed gear (17) which, in the second axial position range (41) of the spindle nut (4), can preferably be connected in torque-locking fashion to the spindle nut (4) by means of a second toothed gear (16), the transmission toothed gear (17) is connected preferably with a transmission ratio of 2:1 by means of a toothing, preferably a crown gear, to the selector pot (19), whereby a rotation of the spindle nut in the first direction of rotation effects a rotation of the selector pot (19) about the shift shaft (7),
the selector pot (19) can be rotated about its axis, wherein said axis runs coaxially with respect to, and preferably coincides with, the axis of the shift shaft (7),
the shift shaft (7) is coupled to the selector pot by means of guide pins (20) which extend through the periodic curved path of the selector pot (19), and a slotted path (21) is provided which is fixed with respect to a housing and into which guide pins (20) engage, whereby, by means of the superposition of the movements of the guide pins (20) in the curved path (22) and in the slotted path (21), the rotational movement of the spindle nut (4) is transformed into a raising and lowering movement (24) of the shift shaft (7) in the longitudinal direction of the shift shaft (7).

11. Gearbox actuator according to one of the preceding claims, **characterized in that**, in addition or alternatively to a shift of a gear ratio in a gearbox by means of the shift lever, a clutch or a brake is actuated.

12. Method for actuating a gearbox actuator (1) according to one of Claims 3 to 6, 8 and 9, **characterized in that** the following method steps are carried out; if a new gear ratio is selected:
i) disengaging the previous gear ratio by virtue of the motor (2) of the gearbox actuator being actuated so as to initially drive the spindle (3) in a first direction of rotation (12),
wherein the spindle nut (4), in a first axial position range (40) of the spindle nut (4), is secured against rotation by a rotation prevention means (9) and moves axially on the spindle (3) and is in engagement with a first toothed gear (5a, 5b) such that, by means of the axial movement of the spindle nut (4), the first toothed gear (5a, 5b) pivots the shift shaft (7), and via the latter a shift lever (8) on the shift shaft (7), such that the engaged gear ratio is disengaged and the shift lever (8) is displaced into a neutral shift gutter,
ii) moving the shift lever (8) into a shift gutter with the selected new gear ratio, by virtue of the motor (2) being actuated, after the gear ratio has been disengaged, such that said motor drives the spindle (3) further in the first direction of rotation (12) such that the spindle nut (4) is displaced axially out of the first axial position range (40) of the spindle nut (4) into a second axial position range (41) of the spindle nut (4) without a rotation prevention means (9),
the spindle nut (4), in the second axial position range (41) of the spindle nut (4), enters into torque-locking connection with a second toothed gear (16),
the rotation of the spindle nut (4) is transmitted to a selector pot (19) via the second toothed gear (16), a transmission toothed gear (17) meshing therewith and a crown gear (18),
the rotational movement of the selector pot (19) effects a periodic raising and lowering movement of the shift shaft (7) in the longitudinal direction of the shift shaft (7) via guide pins (20),
and thus the shift lever (8) is displaced axially with the shift shaft (7) into the shift gutter of the selected new gear ratio, wherein the controller detects the position of the shift lever (8) in the shift gutter of the selected gear ratio in a manner dependent on a sensor signal of a sensor (29),
iii) engaging the selected new gear ratio by virtue of the motor (2) being actuated, in a manner dependent on the position of the selected gear ratio in relation to the shift shaft (7), such that said motor drives the spindle (3) in the first direction of rotation (12) such that the spindle nut (4) is rotated such that its angular position corresponds to the one position in which a toothing (11) of the spindle nut (4), in the first axial position range (40), can engage with exactly one of the first toothed gears (5a, 5b) which can effect a pivoting of the shift shaft (7) and thus of the shift lever (8) in the direction of the selected new gear ratio,
the direction of rotation of the motor (2) is switched into the opposite direction in relation to the first direction of rotation (12) such that the spindle nut (4), owing to a freewheel (28) on the transmission toothed gear (17), is prevented from rotating and as a result is displaced axially in the direction of the first axial position range (40) and, there, by means of an engagement of the toothing (11) into the said first toothed gear (5a, 5b), effects a pivoting of the shift lever (8) in order to engage the new selected gear ratio.

## Revendications

1. Actionneur de transmission présentant exactement un moteur (2), une broche (3) entraînée par le moteur (2), un écrou de broche (4) coopérant avec la broche (3), un arbre (7) de changement de rapport de transmission coopérant au moins indirectement avec l'écrou (4) de broche, l'écrou de broche (4) pouvant exécuter un premier et un deuxième mode de déplacement sélectionnés dans l'ensemble des déplacements de rotation et de translation, le premier mode de déplacement étant différent du deuxième mode de déplacement,
l'actionneur de transmission comprenant en outre au moins une transmission au moyen de laquelle le premier mode de déplacement de l'écrou de broche (4) peut être amené dans un déplacement de sélection de l'arbre (7) de changement de rapport de transmission, **caractérisé en ce que**
la ou les transmissions présentent l'écrou de broche (4), un pignon denté de transmission (17) et une cuvette de sélection (19) à la périphérie de laquelle est disposée une est disposée une piste incurvée périodique (22), coopérant avec l'arbre (7) de changement de rapport de transmission et convertissant dans une deuxième plage axiale de positions de l'écrou de broche (4) un déplacement de rotation de l'écrou de broche (4) en un déplacement essentiellement en va-et-vient périodique de relèvement et d'abaissement de l'arbre (7) de changement de rapport de transmission dans le sens de la longueur de l'arbre (7) de changement de rapport de transmission, en tant que déplacement de sélection.

2. Actionneur de transmission selon la revendication 1, **caractérisé en ce que** la ou les transmissions convertissent le deuxième mode de déplacement de l'écrou de broche (4) en un déplacement de changement de rapport de transmission de l'arbre (7) de changement de rapport de transmission.

3. Actionneur de transmission selon la revendication 2, **caractérisé en ce que** la ou les transmissions présentent l'écrou de broche (4), deux premiers pignons dentés (5a, 5b) et une roue d'arbre (6) qui est reliée à l'arbre (7) de changement de rapport de transmission et qui convertit dans une première plage (40) de positions axiales de l'écrou de broche (4) un déplacement de translation de l'écrou de broche (4) en un déplacement de rotation de l'arbre (7) de changement de rapport de transmission en tant que déplacement de changement de rapport de transmission, par l'intermédiaire d'un seul des premiers pignons dentés (5a, 5b).

4. Actionneur de transmission selon la revendication 3, **caractérisé en ce que** les premiers pignons dentés (5a, 5b) sont découplés l'un de l'autre de telle sorte que dans la première plage (40) de positions axiales, un seul pignon denté (5a, 5b) coopère directement ou indirectement avec l'écrou de broche (4) et a pour effet un déplacement de changement de rapport de transmission de l'arbre (7) de changement de rapport de transmission dans une direction (13), le pivotement du premier pignon denté (5a) ayant pour effet un pivotement de l'arbre de changement de rapport de transmission dans une première direction (13) et le pivotement du deuxième pignon denté (5b) ayant pour effet un pivotement de l'arbre (7) de changement de rapport de transmission dans une deuxième direction opposée à la première direction (13).

5. Actionneur de transmission selon la revendication 4, **caractérisé en ce que** l'écrou de broche (4) est configuré comme crémaillère dotée d'une denture (11), la denture (11) s'étendant sur une partie de la périphérie de l'écrou de broche (4) de telle sorte que l'écrou de broche (4) puisse prendre au moins deux positions angulaires différentes dans lesquelles la denture (11) engage exclusivement l'un ou l'autre premier pignon denté (5a, 5b) lors d'un déplacement de translation de l'écrou de broche (4).

6. Actionneur de transmission selon l'une des revendications 3 à 5, **caractérisé en ce qu'**il présente un blocage en rotation (9) au moyen duquel l'écrou de broche (4) est empêché de tourner par rapport à un carter (10) dans la première plage (40) de positions axiales, l'écrou de broche (4) pouvant se déplacer axialement dans cette première plage (40) de positions axiales et **en ce que** dans une deuxième plage (41) de positions axiales située à l'extérieur de la première plage (40) de positions axiales ou dans une deuxième plage (41) de positions axiales située à l'extérieur de la première plage (40) de positions axiales, l'écrou de broche (4) tourne conjointement avec la broche (3) lors d'une rotation de la broche (3) dans un premier des deux sens de rotation sans alors se déplacer axialement par rapport à la broche (3).

7. Actionneur de transmission selon au moins l'une des revendications précédentes, **caractérisé en ce qu'**il présente un déplacement libre (28) qui empêche que l'écrou de broche (4) se déplace en rotation dans un deuxième sens de rotation sur la broche (3) dans la première plage (40) de positions axiales de telle sorte qu'un déplacement de rotation de l'écrou de broche (4) soit possible uniquement dans un premier sens de rotation pour agir sur le déplacement de sélection de l'arbre (7) de changement de rapport de transmission.

8. Actionneur de transmission selon la revendication 6, **caractérisé en ce que** dans la deuxième plage (41) de positions axiales l'écrou de broche (4) est couplé sur la broche (3) à un déplacement libre (28) par l'intermédiaire d'un pignon denté de transmission (17), **en ce que** lors d'une rotation de la broche (3) dans une deuxième direction, le déplacement libre (28) empêche l'écrou de broche (4) de se déplacer en rotation et agit comme blocage de rotation de telle sorte que la rotation de la broche (3) dans la deuxième direction ait pour effet un déplacement axial de l'écrou de broche (4) sur la broche (3) depuis la deuxième plage (41) de positions axiales jusque dans la première plage (40) de positions axiales.

9. Actionneur de transmission selon l'une des revendications 3 à 6 et 8, **caractérisé en ce qu'**il présente au moins un capteur (29) qui saisit la position de l'un des éléments que sont le pignon denté de transmission (17), l'écrou de broche (4) ou un organe situé entre ces éléments et couplé à ces derniers, et produit ainsi un signal de la position axiale de l'arbre (7) de changement de rapport de transmission, par exemple d'un levier (8) de changement de rapport de transmission de l'arbre (7) de changement de rapport de transmission, par rapport à un rapport visé et/ou un signal de positionnement périphérique de la denture (11) par rapport aux premiers pignons dentés (5a, 5b), signal qui peut être utilisé pour la commande du moteur (2) et pour engager de manière contrôlée un rapport sélectionné au moyen du levier (8) de changement de rapport de transmission, par le fait que le levier (8) de changement de rapport de transmission est engagé dans le rapport sélectionné et est engagé au moyen de l'écrou de broche (4) dans l'un des premiers pignons dentés (5a, 5b) pour faire pivoter le levier (8) de changement de rapport de transmission dans la direction souhaitée pour engager le rapport souhaité.

10. Actionneur de transmission selon l'une des revendications 1 à 9, **caractérisé en ce que** pour convertir le mode de déplacement de l'écrou de broche (4), la ou les transmissions comportent un pignon denté de transmission (17) qui peut être relié dans la deuxième plage (41) de positions axiales de l'écrou de broche (4), de préférence par l'intermédiaire d'un deuxième pignon denté (16), au écrou de broche (4) de manière à transmettre un couple de rotation, **en ce que** le pignon denté de transmission (17) est relié, de préférence dans un rapport de transmission de 2:1, à une denture, de préférence d'une couronne, à la cuvette de sélection (19), grâce à quoi une rotation de l'écrou de broche dans le premier sens de rotation a pour effet une rotation de la cuvette de sélection (19) autour de l'arbre (7) de changement de rapport de transmission,
**en ce que** la cuvette de sélection (19) est tournée autour de son axe, cet axe s'étendant coaxialement par rapport à l'axe de l'arbre (7) de changement de rapport de transmission et coïncidant de préférence avec ce dernier,
**en ce que** l'arbre (7) de changement de rapport de transmission est accouplé à la cuvette de sélection au moyen de tiges de guidage (20) qui traversent la piste incurvée périodique de la cuvette (19) et
**en ce que** l'actionneur de transmission présente une piste (21) de coulisse solidaire du carter, dans laquelle s'engagent les tiges de guidage (20), grâce à quoi la superposition des déplacements des tiges de guidage (20) dans la piste incurvée (22) et dans la piste de coulisseau (21) transforme le déplacement de rotation de l'écrou de broche (4) en un déplacement (24) de relèvement et d'abaissement de l'arbre (7) de changement de rapport de transmission dans le sens de la longueur de l'arbre (7) de changement de rapport de transmission.

11. Actionneur de transmission selon l'une des revendications précédentes, **caractérisé en ce qu'**en plus ou en variante à un changement de rapport de transmission d'une transmission au moyen du levier de changement de rapport de transmission, un embrayage ou un frein sont actionnés.

12. Procédé de commande d'un actionneur de transmission (1) selon l'une des revendications 3 à 6, 8 et 9, **caractérisé en ce que** les étapes suivantes sont exécutées lorsqu'un nouveau rapport de transmission est sélectionné :
i) désengagement du rapport précédent en commandant le moteur (2) de l'actionneur de transmission de telle sorte qu'il entraîne d'abord la broche (3) dans un premier sens de rotation (12),
l'écrou de broche (4) étant empêché de tourner dans une première plage (40) de positions axiales de l'écrou de broche (4) par un blocage en rotation (9) et se déplaçant axialement sur la broche (3) pour engager ainsi un premier pignon denté (5a, 5b) de telle sorte que par le déplacement axial de l'écrou de broche (4), le premier pignon denté (5a, 5b) fait pivoter l'arbre (7) de changement de rapport de transmission et par ce dernier un levier (8) de changement de rapport de transmission prévu sur l'arbre (7) de changement de rapport de transmission de telle sorte que le rapport engagé soit dégagé et que le levier (8) de changement de rapport de transmission soit amené en position neutre,
ii) déplacement du levier (8) de changement de rapport de transmission en une position qui correspond au nouveau rapport sélectionné en commandant le moteur (2) après que le rapport a été désengagé, de telle sorte qu'il poursuive l'entraînement de la broche (3) dans le premier sens de rotation (12), de telle sorte que l'écrou de broche (4) soit déplacé axialement depuis la première plage (40) de positions axiales de l'écrou de broche (4) jusque dans une deuxième plage (41) de positions axiales de l'écrou de broche (4) sans blocage en rotation (9),
lorsque l'écrou de broche (4) se trouve dans la deuxième plage (41) de positions axiales, l'écrou de broche (4) engage un deuxième pignon denté (16) de manière à pouvoir transmettre un couple de rotation,
la rotation de l'écrou de broche (4) est transmise par l'intermédiaire du deuxième pignon denté (16), un pignon denté de transmission (17) engrenant ce pignon denté et une couronne (18) prévue sur une cuvette de sélection (19),
le déplacement de rotation de la cuvette de sélection (19) a pour effet un déplacement périodique de relèvement et d'abaissement de l'arbre (7) de changement de rapport de transmission dans le sens de la longueur de l'arbre (7) de changement de rapport de transmission, par l'intermédiaire de tiges de guidage (20) et
le levier (8) de changement de rapport de transmission est ainsi déplacé axialement avec l'arbre (7) de changement de rapport de transmission dans la position qui correspond au nouveau rapport sélectionné, la commande reconnaissant la position du levier (8) de changement de rapport de transmission qui correspond au rapport sélectionné, en fonction d'un signal d'un capteur (29),
iii) engagement du nouveau rapport sélectionné
en commandant le moteur (2) en fonction de la position du rapport sélectionné par rapport à l'arbre (7) de changement de rapport de transmission de telle sorte qu'il entraîne la broche (3) dans la premier sens de rotation (12) de telle sorte que l'écrou de broche (4) soit tourné, que sa position angulaire corresponde à une position dans laquelle une denture (11) de l'écrou de broche (4) peut venir, dans la première plage (40) de positions axiales, engager exactement l'un des premiers pignons dentés (5a, 5b) qui peut entraîner un pivotement de l'arbre (7) de changement de rapport de transmission et donc du levier (8) de changement de rapport de transmission dans la direction du nouveau rapport sélectionné,
le sens de rotation du moteur (2) est inversé dans le sens opposé au premier sens de rotation (12) de telle sorte que du fait de la rotation libre (28) sur le pignon denté de transmission (17), l'écrou de broche (4) ne puisse tourner et par conséquent soit déplacé axialement en direction du première plage (40) de positions axiales pour y avoir pour effet un pivotement du levier (8) de changement de rapport de transmission en vue de l'engagement du nouveau rapport sélectionné, par l'intermédiaire de l'engagement de la denture (11) dans ledit premier pignon denté (5a, 5b).
